# EUROPEAN PATENT SPECIFICATION

(11) **EP 3 079 897 B1**
(45) Date of publication and mention of the grant of the patent: **18.11.2020**
(21) Application number: 14830906.5
(22) Date of filing: 09.12.2014
(51) Int. Cl.: B32B 5/14, B32B 7/06, B32B 27/32, B32B 27/40, B32B 38/04, B32B 38/10, B23B 3/26, C08J 5/18

(54) **POLYMERIC MULTILAYER FILMS AND METHODS TO MAKE THE SAME**
POLYMERE MEHRSCHICHTIGE FOLIEN UND VERFAHREN ZUR HERSTELLUNG DAVON
FILMS POLYMÈRES MULTICOUCHES ET PROCÉDÉS DE FABRICATION ASSOCIÉS

(30) Priority: 12.12.2013 US 201361915202 P
(43) Date of publication of application: 19.10.2016
(73) Proprietor: 3M Innovative Properties Company, St. Paul, MN 55133-3427 (US)
(72) Inventor: SLAMA, David F., Saint Paul, Minnesota 55133-3427 (US); ANTILA, Garth V., Saint Paul, Minnesota 55133-3427 (US); HANSEN, Brent R., Saint Paul, Minnesota 55133-3427 (US)
(74) Representative: Mathys & Squire
(86) International application number: PCT/US2014/069266
(87) International publication number: WO 2015/089024

(56) References cited:
- WO-A1-2011/081894

## Description

### Background

Perforated films are typically used in the personal hygiene field providing a fluid transfer film allowing the fluid to be removed from areas near to the skin and into the absorbent area. Other common applications are in the food packaging industry and more recently acoustics absorption. Perforated films for these applications are usually less than 100 micrometers (0.004 inch) thick (more typically less than 50 micrometers (0.002 inch) thick) and are made, for example, of olefins, polypropylene, or polyethylene.

Typical processing methods to produce perforated films include; vacuum drawing of film into a perforated panel or roll, use of pressurized fluid to form and puncture the film, needle punching with either cold or hot needles, or lasers to melt holes in the film. These processes, however, tend to have processing limitations such a hole size, hole density, and/or film thickness of film.

Vacuum or pressurized fluid forming of perforated films tends to be limited to relatively thin films (i.e., films less than 100 micrometers thick) due to the forces available to deform and puncture the film. Also materials used in this type of forming process tend to be limited to olefin-based polymers. Another characteristic of this type of process is the creation of a protrusion in the film where the film is stretched until a perforation is created. This protrusion can be an advantage in the case of fluid control where the protrusion can act as a directional flow control feature. However, it can also be a disadvantage in applications where a low pressure drop is desired. The protrusion creates an elongated hole thereby increasing the surface area and increase fluid drag.

Needle punching processes are also largely used for relatively thin films, but film thicknesses up to about 254 micrometers (0.010 inch) are sometimes seen. Limitations with this process tend to include perforation diameter holes per unit area, and protrusions in the film.

Laser perforation processes can provide relatively small holes (i.e., less than 50 micrometers), can perforate a wide range of thicknesses, can create perforations that are planar with the film surfaces (i.e., without the protrusions associated, for example, with needle punching processes). Limitations of laser perforation processes include the types of materials that suitable for the process, and processing speeds and costs. Laser perforation processes tend to be best suited for processing films from polyethylene terephthalate (PET), polyethylenenaphthalate (PEN), polycarbonate (PC), or other higher glass transition temperature materials. Lasers are often not very effective, for example, in perforating olefin-based materials.

WO 2011/081894 reports microperforated polymeric films comprising: opposed first and second surfaces separated by a first certain distance (40a); and a plurality of channels perpendicular to the first and second surfaces, wherein a first opening (20a-c) of a channel intersects the first surface and a second (22a-c) of the channel intersects the second surface; wherein the diameter of the first opening is larger than the diameter of the second opening and the second openings on the second surface are spaced apart by a second certain distance (50a); wherein the ratio of the first certain distance to the second certain distance is at least 0.25; and further wherein the second surface has an open area of at least 10 %. Also described are methods of making and using such microperforated polymeric films.

### Summary

In one aspect, the present disclosure describes a polymeric multilayer film having first and second generally opposed major surfaces, and comprising first, second, and third layers, an array of blind openings between the first and second major surfaces, and an average thickness, wherein the first, second, and third layers each have a first average thickness excluding any thickness said first, second, and third layers having in any of the blind openings, wherein the first and second layers extend into the first average thickness of the third layer, wherein each of the first, second, and third layers each have a second average thickness (including a thickness of zero) in the blind holes, wherein the second average thickness of the first and third layers are each greater than zero, and wherein the ratio of the first average thickness of the second layer to the second average thickness of the second layer is at least 2:1, 4:1, 6:1, 8:1, 10:1, 20:1, 30:1, 40:1, 50:1, 100:1, 150:1, 200:1, or even infinity: 1; in some embodiments, in a range from 2:1 to infinity:1, 2:1 to 10:1, 2:1 to 50:1, 2:1 to 100:1, 2:1 to 200:1, 2:1 to infinity:1, 10:1 to 50:1, 10:1 to 100:1, 10:1 to 150:1, 10:1 to 200:1, 10:1 to infinity: 1).

In another aspect, the present disclosure describes a method of making a polymeric multilayer film, the method comprising:
extruding at least three polymeric layers into a nip to provide a polymeric multilayer film, wherein the nip comprises a first roll having a structured surface that imparts indentations through a first major planar surface of the polymeric multilayer film providing blind openings. Optionally the method further comprises passing the first major planar surface having the indentations over a chill roll while applying a heat source to a generally opposed second major surface of the polymeric multilayer film, wherein the application of heat from the heat source results in at least of the blind openings becoming through openings in the polymeric multilayer film (i.e., the opening extends through the thickness of the polymeric multilayer film from the first major surface to the second major surface).

In some embodiments, the method further comprises separating at least two of the three polymeric layers of the polymeric multilayer film having the array of openings from each other. In some embodiments, the method further comprises separating each of the three polymeric layers of the polymeric multilayer film having the array of openings from each other.

Embodiments of polymeric multilayer film described herein are useful, for example, for acoustic absorption.

### Brief Description of the Drawings

FIGS. 1, 1A, 1B, and 1C are schematics of an exemplary polymeric multilayer films described herein;
FIGS. 2 and 2A are schematics of an exemplary method for making exemplary polymeric multilayer film described herein; and
FIG. 2B is a schematic of an exemplary polymeric multilayer film described herein.

### Detailed Description

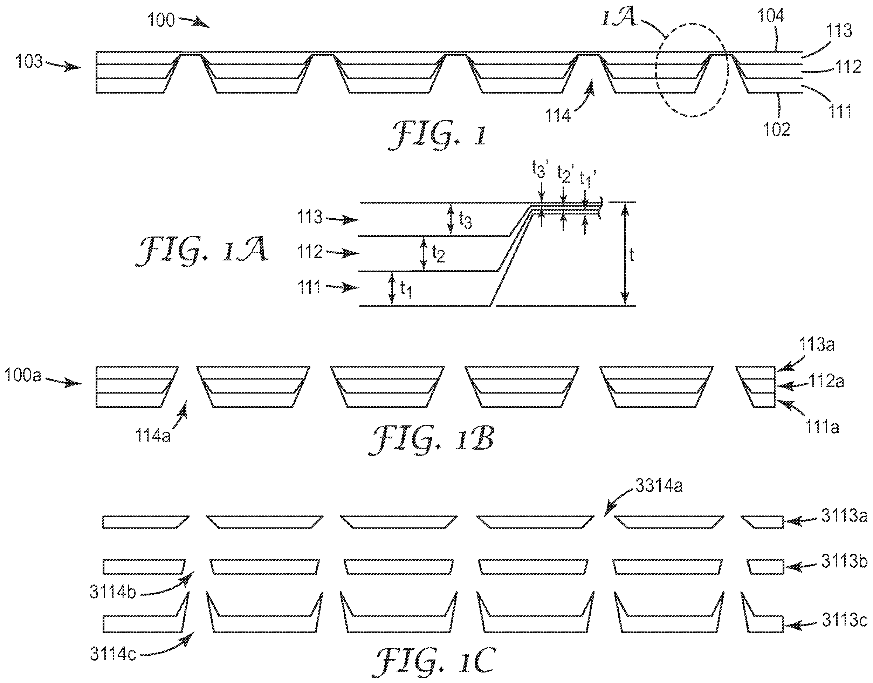

Referring to FIGS. 1 and 1A, exemplary polymeric multilayer film described herein 100 has first and second generally opposed major surfaces 102, 104, and first, second, and third layers, 111, 112, 113, an array of blind openings 114 between the first and second major surfaces 102, 104, and a thickness, t. The first, second, and third layers each have a first average thickness, t₁, t₂, and t₃, respectively (excluding any thickness said first, second, and third layers 111, 112, and 113 have in any of the blind openings 114). The first, second, and third layers each have a second average thickness t₁', t₂', and t₃', respectively, in the blind holes. The ratio of the first average thickness of the second layer to the second average thickness of the second layer is at least 2:1.

Typically, the first average thickness of the first layer, excluding any thickness the first layer has in any of the blind openings, is at least 25 micrometers; in some embodiments, in a range from 50 micrometers to 200 micrometers. Typically, the first average thickness of the second layer, excluding any thickness the second layer has in any of the blind openings, is at least 25 micrometers; in some embodiments, in a range from 50 micrometers to 500 micrometers. Typically, the first average thickness of the third layer, excluding any thickness the third layers has in any of the blind openings, is at least 25 micrometer; in some embodiments, in a range from 50 micrometers to 200 micrometers, where in t average thicknesses of a layer is determined by an average of 10 measurements.

Typically, the second average thickness of the first layer in the blind holes is not greater than 15 micrometers; in some embodiments, in a range from 0 micrometer to 15 micrometers. Typically, the second average thickness of the first layer in the blind holes is not greater than 50 micrometers; in some embodiments, in a range from 10 micrometers to 50 micrometers; an in some embodiments the thickness of the second layer in the blind openings is zero. Typically, the second average thickness of the third layer in the blind holes is not greater than 100 micrometers; in some embodiments, in a range from 10 micrometers to 100 micrometers.

In some embodiments, the ratio of the first average thickness of the second layer to the second average thickness of the second layer is at least 2:1, 4:1, 6:1, 8:1, 10:1, 20:1, 30:1, 40:1, 50:1, 100:1, 150:1, 200:1, or even infinity: 1; in some embodiments, in a range from 2:1 to infinity: 1, 2:1 to 10:1, 2:1 to 50:1, 2:1 to 100:1, 2:1 to 200:1, 2:1 to infinity: 1, 10:1 to 50:1, 10:1 to 100:1, 10:1 to 150:1, 10:1 to 200:1, 10:1 to infinity: 1).

In some embodiments, the average thickness of the polymeric multilayer film is greater than 75 micrometers (in some embodiments, greater than 150 micrometers, 200 micrometers, 250 micrometers, 500 micrometers, 750 micrometers, 1000 micrometers, 1500 micrometers, 2000 micrometers, or even at least 2500 micrometers; in some embodiments, in a range from 125 micrometers to 1500 micrometers, or even 125 micrometers to 2500 micrometers).

The blind openings may be in any of a variety of shapes, including circles and ovals.

In some embodiments, the blind openings have a depth in a range from 15 micrometers to 650 micrometers (in some embodiments, from 50 micrometers to 400 micrometers, 75 micrometers to 300 micrometers, or 100 micrometers to 250 micrometers).

In some embodiments, there are at least 30 blind openings/cm², at least 100 blind openings/cm², 200 blind openings/cm², 250 blind openings/cm², 300 blind openings/cm², 400 blind openings/cm², 500 blind openings/cm², 600 blind openings/cm², 700 blind openings/cm², 750 blind openings/cm², 800 blind openings/cm², 900 blind openings/cm², 1000 blind openings/cm², 2000 blind openings/cm², 3000 blind openings/cm², or even least 4000 blind openings/cm²; in some embodiments, in a range from 30 blind openings/cm² to 200 blind openings/cm², 200 blind openings/cm² to 500 blind openings/cm², or even 500 blind openings/cm² to 4000 blind openings/cm².

FIG. 1B shows the exemplary polymeric multilayer film described herein 100 from FIG. 1 after the blind openings (114) have been opened by a heat source. Exemplary polymeric multilayer film 100a comprises first, second, and third layers 111a, 112a, 113a, and an array of openings 114a.

FIG. 1C shows the exemplary polymeric multilayer film 100a with each of the layers 111a, 112a, 113a from FIG. 1B separated. Layer 3113a has openings 3114a. Layer 3113b has openings 3114b. Layer 3113c has openings 3114c.

Exemplary polymeric materials for making the polymeric multilayer films include polypropylene and polyurethane. In some embodiments of polymeric multilayer films described herein at least one of the layers comprises polypropylene and at least another of the layers comprises polyurethane.

Exemplary polymeric materials for making the polymeric multilayer films include polyamide 6, polyamide 66, polyethyleneterephthalate (PET), copolyester (PETg), cellulose acetobutyrate (CAB), polymethylmethacrylate (PMMA), acrylonitrile butadiene styrene (ABS), polyolefin copolymers, polyethylene, and polystyrene (PS), ethylene vinyl alcohol (EVOH), polycarbonate (PC), polybutyleneterephthalate (PBT), polyethylenenaphthalate (PEN), polypropylene (PP), polyethelyene (PE), polyurethane (TPU), propylene-based interpolymers and ethylene -based interpolymers.

Examples of suitable material combinations that are separable include: linear low density polyethylene (LLDPE) and polyurethane (TPU); medium density polyethylene (MDPE) and polyurethane (TPU); high density polyethylene (HDPE) and polyurethane (TPU); polypropylene and polyurethane (TPU); polystyrene (PS) and polyurethane (TPU); polyethyleneterephthalate (PET) and propylene-based interpolymers; polyethyleneterephthalate (PET) and ethylene-based interpolymers; copolyester (PETg) and propylene-based interpolymers; copolyester (PETg) and ethylene-based interpolymers; acrylonitrile butadiene styrene (ABS)and propylene-based interpolymers; acrylonitrile butadiene styrene (ABS)and ethylene -based interpolymers; polycarbonate (PC) and propylene-based interpolymers; polycarbonate (PC) and ethylene -based interpolymers; polymethylmethacrylate (PMMA) and propylene-based interpolymers; and polymethylmethacrylate (PMMA) and ethylene -based interpolymers.

Suitable polypropylene materials include homo polypropylene and modified polypropylene such as block copolymers, impact copolymer, and random copolymers.

In some embodiments, the first layer comprises at least one of polycarbonate, polyethyleneterephthalate (PET), copolyesters (PETg), polymethylmethacrylate (PMMA) oracrylonitrile butadiene styrene (ABS and the second layer comprises propylene-based interpolymers. In some embodiments, the first layer comprises polyethylene and the second layer comprises polyurethane (TPU).

In some embodiments, wherein the first layer comprises at least one polyolefin (e.g., polypropylene or polyethylene); wherein the second layer comprises at least one of a polyurethane (including polyurethanes), a propylene interpolymer (including propylene interpolymers), or ethylene interpolymer (including ethylene interpolymers); and wherein the third layer comprises at least one polyolefin (e.g., polypropylene or polyethylene). Exemplary ethylene interpolymers are available, for example, under the trade designation "EXACT" from ExxonMobil, Irving, TX; and "ENGAGE" from Dow Chemical Company, Midland, MI. Exemplary propylene interpolymers are available, for example, under the trade designation "VISTAMAXX" from ExxonMobil and "VERSIFY" from Dow Chemical Company.

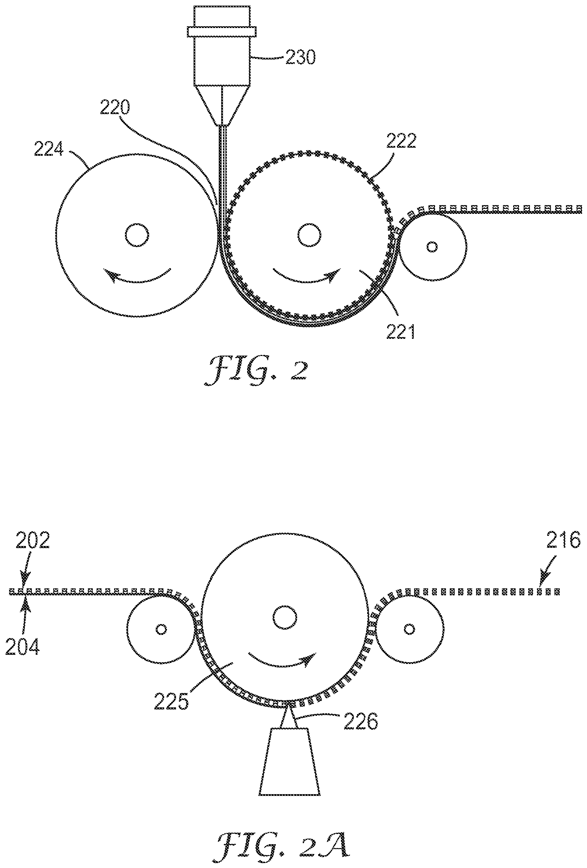

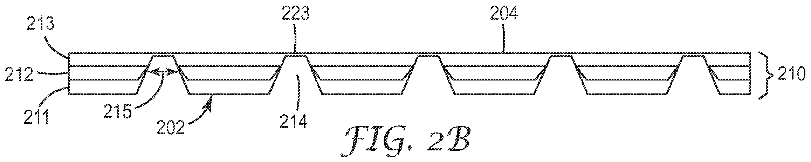

Polymeric multilayer films described herein such as shown in FIG. 2B can be made, for example, by methods described herein. For example, FIGS. 2 and 2A are schematics of exemplary methods. Three polymeric layers 211, 212, 213 are extruded into nip 220 to provide polymeric multilayer film 210. Nip 220 has first roll 221 having structured surface 222 that imparts indentations 214 through first major planar surface 202 of polymeric multilayer film 210 providing blind openings 214. Optionally the first major planar surface 202 of polymeric multilayer film 210 having indentations is processed over chill roll 225 while applying heat source 226 to generally opposed second major surface 204 of polymeric multilayer film 210. The application of heat from heat source 226 (e.g., a flame) results in formation of openings 216 in polymeric multilayer film 210.

Optionally, any of the polymeric materials comprising an article described herein may comprise additives such as inorganic fillers, pigments, slip agents, and flame retardants.

Suitable extrusion apparatuses (including materials for making components of the apparatuses) for making multilayer films described herein should be apparent to those skilled in the art after reviewing the instant disclosure, including the working examples. For example, the rolls (e.g., 221, 224, 225) can be made of metals such as steel. In some embodiments the surface of rolls contacting the polymeric material(s) are chrome plated, copper plated, or aluminum. Rolls can be chilled, for example using conventional techniques such as water cooling. Nip force can be provided, for example, by pneumatic cylinders.

Exemplary extrusion speeds include those in a range from 3-15 m/min. (in some embodiments, in a range from 15-50 m/min, 50-100 m/min., or more).

Exemplary extrusion temperatures are in range from 200°C-230°C (in some embodiments, in a range from 230°C-260°C, 260-300°C, or greater).

Embodiments of polymeric multilayer film described herein are useful, for example, for acoustic absorption.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Example 1

A perforated multilayer polymeric film as shown in FIG. 2B was prepared using the following procedures. A three layer polymeric film consisting of layers A, B and C was prepared using three extruders to feed a 25 cm wide 3 layer multi-manifold die (obtained under the trade designation "CLOEREN" from Cloeren, Inc., Orange TX). The extrusion process was done vertically downward into a nip consisting of a tooling roll (221) and a smooth steel backup roll (225). The extrusion process was configured such that layer A contacted the tooling roll (221) and layer C contacted the backup roll (224) as shown schematically in FIG. 2. The polymer for layer A was provided with a 3.2 cm single screw extruder. The polymer for layer B was provided with a 3.2 cm single screw extruder. The polymer for layer C was provided with a 3.2 cm single screw extruder. Heating zone temperatures for the three extruders is shown in Table 1, below.

**Table 1**

| Heating Zones | 3.2 cm (1.25 inch) Layer A, °C | 3.2 cm (1.25 inch) Layer B, °C | 3.2 cm (1.25 inch) Layer C, °C | Die, °C |
|---|---|---|---|---|
| Zone 1 | 190 | 176 | 190 | 218 |
| Zone 2 | 204 | 193 | 204 | 218 |
| Zone 3 | 218 | 193 | 218 | 218 |
| Zone 4 | 218 | 193 | 218 | N/A |
| End cap | 218 | 193 | 218 | N/A |
| Neck Tube | 218 | 193 | 218 | N/A |

The rpms of the extruders are listed in Table 2, below.

**Table 2**

| | 3.2 cm (1.25 inch) Layer A | 3.2 cm (1.25inch) Layer B | 3.2 cm (1.25 inch) Layer C |
|---|---|---|---|
| Extruder rpm | 70 | 90 | 42 |

Layers A (211) was extruded using a polypropylene impact copolymer resin (obtained under the trade designation "DOW C700-35N 35 MFI" from Dow Chemical Company, Midland, MI). Layers B (212) was extruded using a polyurethane resin (obtained under the trade designation "IROGRAN A 78 P 4766" from Huntsman International LLC, Woodlands, TX). Layer C (213) was extruded using polypropylene impact copolymer resin ("DOW C700-35N 35 MFI"). The basis weight of layer A (211) was 174 g/m². The basis weight of layer B (212) was 96 g/m². The basis weight of layer C (213) was 92 g/m². The two rolls comprising the nip were water cooled rolls (221, 224) with a nominal 30.5 cm in diameter and 40.6 cm face widths. Nip force was provided by pneumatic cylinders. The smooth steel backup roll (224) temperature set point of 49°C. The tooling roll (221) had male post features (222) cut into the surface of the roll. The male post features were chrome plated. The male features (defined as posts) (222) on the tool surface were flat square topped pyramids with a square base. The top of the posts were 94 micrometers square and the bases were 500 micrometers square. The overall post height was 914 micrometers. The center to center spacing of the posts was 820 micrometers in both the radial and cross roll directions. The tooling roll (221) had a temperature set point of 49°C. The tooling roll (221) and backup rolls (224) were directly driven. The nip force between the two nip rolls was 356 Newton per linear centimeter. The extrudate takeaway line speed was 2.4 m/min.

The polymers for the three layers were extruded from the die (230) directly into the nip (220) between the tooling (221) and backup roll (224). The male features (222) on the tooling roll (221) created indentations (214) in the extrudate. A thin layer of polymer (223) remained between the tooling (221) and backup roll (224). Typically this layer (223) was less than 20 micrometer thick. The extrudate remained on the tooling roll (221) for 180 degrees of wrap to chill and solidify the extrudate into a multilayer polymeric film. Layers A (211), B (212), and C (213) were then separated from each other. Layer B (212) is a perforated film having an array of holes.

### Example 2

A perforated multilayer polymeric film as shown in FIG. 2B was prepared using the following procedures. A three layer polymeric film consisting of layers A, B and C was prepared using three extruders to feed a 25 cm wide 3 layer multi-manifold die ("CLOEREN"). The extrusion process was done vertically downward into a nip consisting of a tooling roll (221) and a smooth steel backup roll (224). The extrusion process was configured such that layer A contacted the tooling roll (221) and layer C contacted the backup roll (224) as shown schematically in FIG. 2. The polymer for layer A was provided with a 3.2 cm single screw extruder. The polymer for layer B was provided with a 3.2 cm single screw extruder. The polymer for layer C was provided with a 3.2 cm single screw extruder. Heating zone temperatures for the three extruders is shown in Table 3, below.

**Table 3**

| Heating Zones | 3.2 cm (1.25 inch) Layer A, °C | 3.2 cm (1.25 inch) Layer B, °C | 3.2 cm (1.25 inch) Layer C, °C | Die, °C |
|---|---|---|---|---|
| Zone 1 | 246 | 190 | 246 | 260 |
| Zone 2 | 260 | 204 | 246 | 260 |
| Zone 3 | 260 | 218 | 260 | 260 |
| Zone 4 | 260 | 232 | 260 | N/A |
| End cap | 260 | 232 | 260 | N/A |
| Neck Tube | 260 | 2323 | 260 | N/A |

The rpms of the extruders are listed in Table 4, below.

**Table 4**

| | 3.2 cm (1.25 inch) Layer A | 3.2 cm (1.25inch) Layer B | 3.2 cm (1.25 inch) Layer C |
|---|---|---|---|
| Extruder rpm | 40 | 85 | 30 |

Layers A and C (211, 213) was extruded using a polycarbonate resin (obtained under the trade designation "BAYER MAKROLON 2447" from Bayer Material Science, Pittsburgh, PA). Layers B (212) was extruded using an ethylene -based interpolymer resin (obtained under the trade designation "ENGAGE 8411" from Dow Chemical Company). The basis weight of layer A (211) was 232 g/m². The basis weight of layer B (212) was 56 g/m². The basis weight of layer C (213) was 130 g/m². The two rolls comprising the nip were water cooled rolls (221, 224) with a nominal 30.5 cm in diameter and 40.6 cm face widths. Nip force was provided by pneumatic cylinders. The smooth steel backup roll (224) temperature set point of 38°C. The tooling roll (221) had male post features (222) cut into the surface of the roll. The male post features were chrome plated. The male features (defined as posts) (222) on the tool surface were flat square topped pyramids with a square base. The top of the posts were 94 micrometers square and the bases were 500 micrometers square. The overall post height was 914 micrometers. The center to center spacing of the posts was 820 micrometers in both the radial and cross roll directions. The tooling roll (221) had a temperature set point of 38°C. The tooling roll (221) and backup roll (224) were directly driven. The nip force between the two nip rolls was 356 Newton per linear centimeter. The extrudate takeaway line speed was 3.0 m/min.

The polymers for the three layers were extruded from the die (230) directly into the nip (220) between the tooling (221) and backup roll (224). The male features (222) on the tooling roll (221) created indentations (214) in the extrudate. A thin layer of polymer (223) remained between the tooling (221) and backup roll (224). Typically this layer (223) was less than 20 micrometer thick. The extrudate remained on the tooling roll (221) for 180 degrees of wrap to chill and solidify the extrudate into a multilayer polymeric film. Layers A (211), B (212) and C (213) were then separated from each other. Layer B (212) is a perforated film having an array of holes.

## Claims

1. A polymeric multilayer film (100) having first and second generally opposed major surfaces (102, 104), and comprising first, second, and third layers (111, 112, 113), an array of blind openings (114) between the first and second major surfaces (102, 104), and an average thickness (t), wherein the first, second, and third layers (111, 112, 113) each have a first average thickness (t₁, t₂, t₃) excluding any thickness said first, second, and third layers (111, 112, 113) having in any of the blind openings (114), wherein the first and second layers (111, 112) extend into the first average thickness of the third layer (t₃), wherein each of the first, second, and third layers (111, 112, 113) each have a second average thickness (t₁', t₂', t₃') in the blind holes (114), wherein the second average thickness of the first and third layers (t₁', t₃') are each greater than zero, and wherein the ratio of the first average thickness of the second layer (t₂) to the second average thickness of the second layer (t₂') is at least 2:1.

2. The polymeric multilayer film (100) of claim 1, wherein the ratio of the first average thickness of the second layer (t₂) to the second average thickness of the second layer (t₂') is at least 6:1.

3. The polymeric multilayer film (100) of claim 1, wherein the ratio of the first average thickness of the second layer (t₂) to the second average thickness of the second layer (t₂') is at least 10:1.

4. The polymeric multilayer film (100) of claim 1, wherein the ratio of the first average thickness of the second layer (t₂) to the second average thickness of the second layer (t₂') is at least 50:1.

5. The polymeric multilayer film (100) of claim 1, wherein the ratio of the first average thickness of the second layer (t₂) to the second average thickness of the second layer (t₂') is infinity:1.

6. The polymeric multilayer film (100) of any preceding claim, wherein the average thickness of the polymeric multilayer film (t) is greater than 75 micrometers.

7. The polymeric multilayer film (100) of any preceding claim, wherein the blind openings (114) have a depth in a range from 15 micrometers to 650 micrometers.

8. A method of making the polymeric multilayer film (100) of claim 1, the method comprising:
extruding at least three polymeric layers (211, 212, 213) into a nip (220) to provide a polymeric multilayer film (100), wherein the nip (220) comprises a first roll (221) having a structured surface (222) that imparts indentations (214) through a first major planar surface (202) of the polymeric multilayer film (100) providing blind openings (114).

9. The method of claim 8, further comprising passing the first major planar surface (202) having the indentations (214) over a chill roll (225) while applying a heat source (226) to a generally opposed second major surface (204) of the polymeric multilayer film (210), wherein the application of heat from the heat source (226) results in at least some of the blind openings (114) becoming through openings (216) in the polymeric multilayer film (210).

10. The method of either claim 8 or 9, further comprising separating at least two of the three polymeric layers (211, 212, 213) of the polymeric multilayer film (210) having the array of openings (216) from each other.

11. The method of either claim 8 or 9, further comprising separating each of the three polymeric layers (211, 212, 213) of the polymeric multilayer film (210) having the array of openings (216) from each other.

12. The method of any preceding claim, wherein the first layer (211) comprises at least one polyolefin; wherein the second layer (212) comprises at least one of a polyurethane, a propylene interpolymer, or ethylene interpolymer; and wherein the third layer (213) comprises at least one polyolefin.

## Patentansprüche

1. Eine polymere Mehrschichtfolie (100), die eine erste und eine zweite Hauptoberfläche (102, 104), die einander im Wesentlichen gegenüberliegen, aufweist und eine erste, eine zweite und eine dritte Schicht (111, 112, 113), eine Anordnung von Sacköffnungen (114) zwischen der ersten und der zweiten Hauptoberfläche (102, 104) und eine mittlere Dicke (t) umfasst, wobei die erste, die zweite und die dritte Schicht (111, 112, 113) jeweils eine erste mittlere Dicke (t₁, t₂, t₃) aufweisen, unter Ausschluss jeglicher Dicken, die die erste, die zweite und die dritte Schicht (111, 112, 113) in einer der Sacköffnungen (114) aufweisen, wobei sich die erste und die zweite Schicht (111, 112) in die erste mittlere Dicke der dritten Schicht (t₃) erstrecken, wobei jede von der ersten, der zweiten und der dritten Schicht (111, 112, 113) jeweils eine zweite mittlere Dicke (t₁', t₂', t₃') in den Sacköffnungen (114) aufweist, wobei die zweite mittlere Dicke der ersten und der dritten Schicht (t₁', t₃') jeweils größer als null ist und wobei das Verhältnis von der ersten mittleren Dicke der zweiten Schicht (t₂) zu der zweiten mittleren Dicke der zweiten Schicht (t₂') mindestens 2:1 beträgt.

2. Die polymere Mehrschichtfolie (100) nach Anspruch 1, wobei das Verhältnis der ersten mittleren Dicke der zweiten Schicht (t₂) zur zweiten mittleren Dicke der zweiten Schicht (t₂') mindestens 6:1 beträgt.

3. Die polymere Mehrschichtfolie (100) nach Anspruch 1, wobei das Verhältnis des ersten mittleren Dicke der zweiten Schicht (t₂) zur zweiten mittleren Dicke der zweiten Schicht (t₂') mindestens 10:1 beträgt.

4. Die polymere Mehrschichtfolie (100) nach Anspruch 1, wobei das Verhältnis des ersten mittleren Dicke der zweiten Schicht (t₂) zur zweiten mittleren Dicke der zweiten Schicht (t₂') mindestens 50:1 beträgt.

5. Die polymere Mehrschichtfolie (100) nach Anspruch 1, wobei das Verhältnis der ersten mittleren Dicke der zweiten Schicht (t₂) zur zweiten mittleren Dicke der zweiten Schicht (t₂') unendlich:1 beträgt.

6. Die polymere Mehrschichtfolie (100) nach einem der vorstehenden Ansprüche, wobei die mittlere Dicke der polymeren Mehrschichtfolie (t) größer als 75 Mikrometer ist.

7. Die polymere Mehrschichtfolie (100) nach einem der vorstehenden Ansprüche, wobei die Sacköffnungen (114) eine Tiefe in einem Bereich von 15 Mikrometern bis 650 Mikrometern aufweisen.

8. Ein Verfahren zum Herstellen der polymeren Mehrschichtfolie (100) nach Anspruch 1, wobei das Verfahren umfasst:
Extrudieren mindestens dreier polymerer Schichten (211, 212, 213) in einen Spalt (220), um eine polymere Mehrschichtfolie (100) bereitzustellen, wobei der Spalt (220) eine erste Walze (221) mit einer strukturierten Oberfläche (222) umfasst, die Vertiefungen (214) durch eine erste, flache Hauptoberfläche (202) der polymeren Mehrschichtfolie (100) vermittelt, die Sacköffnungen (114) bereitstellt.

9. Das Verfahren nach Anspruch 8, ferner umfassend das Leiten der ersten flachen Hauptoberfläche (202) mit den Vertiefungen (214) über eine Kühlwalze (225) unter Anwendung einer Wärmequelle (226) auf eine im Allgemeinen gegenüberliegende zweite Hauptoberfläche (204) der polymeren Mehrschichtfolie (210), wobei das Anwenden von Wärme von der Wärmequelle (226) zur Folge hat, dass zumindest einige der Sacköffungen (114) zu Durchgangsöffnungen (216) in der polymeren Mehrschichtfolie (210) werden.

10. Das Verfahren nach Anspruch 8 oder 9, ferner umfassend das Trennen von mindestens zwei der drei polymeren Schichten (211, 212, 213) der polymeren Mehrschichtfolie (210) mit der Anordnung der Öffnungen (216) voneinander.

11. Das Verfahren nach Anspruch 8 oder 9, ferner umfassend das Trennen jeder der drei polymeren Schichten (211, 212, 213) der polymeren Mehrschichtfolie (210) mit der Anordnung der Öffnungen (216) voneinander.

12. Das Verfahren nach einem der vorstehenden Ansprüche, wobei die erste Schicht (211) mindestens ein Polyolefin umfasst; wobei die zweite Schicht (212) mindestens eines von einem Polyurethan, einem Propyleninterpolymer oder Ethyleninterpolymer umfasst; und wobei die dritte Schicht (213) mindestens ein Polyolefin umfasst.

## Revendications

1. Film multicouche polymère (100) ayant des première et deuxième surfaces principales généralement opposées (102, 104), et comprenant des première, deuxième et troisième couches (111, 112, 113), un réseau d'ouvertures borgnes (114) entre les première et deuxième surfaces principales (102, 104), et une épaisseur moyenne (t), dans lequel les première, deuxième et troisième couches (111, 112, 113) ont chacune une première épaisseur moyenne (t₁, t₂, t₃) excluant n'importe quelle épaisseur que lesdites première, deuxième et troisième couches (111, 112, 113) ont dans n'importe laquelle des ouvertures borgnes (114), dans lequel les première et deuxième couches (111, 112) s'étendent dans la première épaisseur moyenne de la troisième couche (t₃), dans lequel chacune des première, deuxième et troisième couches (111, 112, 113) a une deuxième épaisseur moyenne (t₁', t₂', t₃') dans les trous borgnes (114), dans lequel les deuxièmes épaisseurs moyennes des première et troisième couches (t₁', t₃') sont chacune supérieures à zéro, et dans lequel le rapport de la première épaisseur moyenne de la deuxième couche (t₂) à la deuxième épaisseur moyenne de la deuxième couche (t₂') vaut au moins 2:1.

2. Film multicouche polymère (100) selon la revendication 1, dans lequel le rapport de la première épaisseur moyenne de la deuxième couche (t₂) à la deuxième épaisseur moyenne de la deuxième couche (t₂') vaut au moins 6:1.

3. Film multicouche polymère (100) selon la revendication 1, dans lequel le rapport de la première épaisseur moyenne de la deuxième couche (t₂) à la deuxième épaisseur moyenne de la deuxième couche (t₂') vaut au moins 10:1.

4. Film multicouche polymère (100) selon la revendication 1, dans lequel le rapport de la première épaisseur moyenne de la deuxième couche (t₂) à la deuxième épaisseur moyenne de la deuxième couche (t₂') vaut au moins 50:1.

5. Film multicouche polymère (100) selon la revendication 1, dans lequel le rapport de la première épaisseur moyenne de la deuxième couche (t₂) à la deuxième épaisseur moyenne de la deuxième couche (t₂') vaut l'infini: 1.

6. Film multicouche polymère (100) selon une quelconque revendication précédente, dans lequel l'épaisseur moyenne du film multicouche polymère (t) est supérieure à 75 micromètres.

7. Film multicouche polymère (100) selon une quelconque revendication précédente, dans lequel les ouvertures borgnes (114) ont une profondeur dans une plage allant de 15 micromètres à 650 micromètres.

8. Procédé de fabrication du film multicouche polymère (100) selon la revendication 1, le procédé comprenant :
l'extrusion d'au moins trois couches polymères (211, 212, 213) dans une ligne de contact (220) pour fournir un film multicouche polymère (100), dans lequel la ligne de contact (220) comprend un premier rouleau (221) ayant une surface structurée (222) qui confère des indentations (214) à travers une première surface plane principale (202) du film multicouche polymère (100) fournissant des ouvertures borgnes (114).

9. Procédé selon la revendication 8, comprenant en outre le passage de la première surface plane principale (202) ayant les indentations (214) par-dessus un rouleau refroidisseur (225) tout en appliquant une source de chaleur (226) à une deuxième surface principale généralement opposée (204) du film multicouche polymère (210), dans lequel l'application de chaleur à partir de la source de chaleur (226) résulte en ce qu'au moins certaines des ouvertures borgnes (114) deviennent des ouvertures traversantes (216) dans le film multicouche polymère (210).

10. Procédé selon la revendication 8 ou la revendication 9, comprenant en outre la séparation d'au moins deux des trois couches polymères (211, 212, 213) du film multicouche polymère (210) ayant le réseau d'ouvertures (216) les unes par rapport aux autres.

11. Procédé selon la revendication 8 ou la revendication 9, comprenant en outre la séparation de chacune des trois couches polymères (211, 212, 213) du film multicouche polymère (210) ayant le réseau d'ouvertures (216) les unes par rapport aux autres.

12. Procédé selon l'une quelconque des revendications précédentes, dans lequel la première couche (211) comprend au moins une polyoléfine ; dans lequel la deuxième couche (212) comprend au moins l'un parmi un polyuréthane, un interpolymère de propylène, ou un interpolymère d'éthylène ; et dans lequel la troisième couche (213) comprend au moins une polyoléfine.
